# EUROPEAN PATENT APPLICATION

(11) **EP 1 936 506 A1**
(43) Date of publication of application: **25.06.2008**
(21) Application number: 06126390.1
(22) Date of filing: 18.12.2006
(51) Int. Cl.: G06F 11/36

(54) **System test generator**

(71) Applicant: Leirios, 25000 Besancon (FR)
(72) Inventor: Legeard, Bruno, BESANCON 25000 (FR); Bernard, Eddy, München 80336 (DE)
(74) Representative: Tetaz, Franck Claude Edouard

(57) **Abstract**

The invention relates to a test generation method for a system such as an integrated device and/or a computer program, comprising the following steps of generating a test set or sequence, applying the generated test set or sequence to the system, characterized in that it comprises setting triggers on given events and according given rules and/or criteria to each trigger, associating a designated action to each events, applying the designated actions if the criteria and/or rules corresponding to associate events are met. The Method further comprises computing additional information required by the designated actions. Additional information is computed on the basis of signal and/or behavior and/or data of the system under test. Moreover, given events and/or additional information are observed in the system under test environment or are predicted or extrapolated by any computational process.

The invention also relates to a system and machine readable instructions, embodied in a tangible medium.

## Description

### FIELD OF THE INVENTION

The present invention relates to a test generation for a system such an integrated device, a computer program or a combination of an integrated device and a computer program.

### BACKGROUND OF THE INVENTION

The tests generation method for systems, such as micro-processors, integrated circuit, computer program or similar, have become increasingly sophisticated due to an increase of functionality of these systems.

The characterization and testing of these systems play a major role in ensuring the performance of these systems. A system can be any software, hardware or combination of hardware and software whose behavior may be characterized by any kind of detectable signal or data.

Testing a system, called hereinafter System Under Test (SUT), can be defined as performing a set of actions to perform under given conditions, observing the output data of the SUT, comparing the output data with the expected output data and formulating a verdict from the comparison of observed and expected behavior. A test consists in a determined set or sequence of actions to perform, associated with eventual action conditions and/or data, and of expected output data of the SUT pursuant to the execution of each action of the test.

An action performed with the SUT may have both external and internal effects. If the SUT is a piece of software, external effects may be data directly returned by an invoked operation or function, and internal effects may be updates of internal variables with results of computations performed as a consequence of the stimulating action. It is easy to observe external effects and to compare them with expected ones but internal effects are not directly observable and require the execution of complementary actions. These complementary actions produce external effects which permit to deduce some information about the internal effects of the initially targeted actions.

Generating a test to functionally verify the design of the system needs to select the relevant operations to invoke and to select any relevant data, conditions and timing.

In most cases, these tests are manually generated by a man skilled in the art of designing a test sequence. The man skilled in the art must observe any signal, behavior or data at any time to write a computer program which performs a set or a sequence of actions and compare behavior of the SUT with the expected behavior. This kind of generating test leads to a huge set of observation actions to perform and makes test processes rather inefficient.

Alternatively, methods for automatically generating a test are well known. These methods usually comprise specifying one or more test parameters, generating a test set or sequence by associating one or more test parameters with a test pattern and applying the generated test set or sequence to the SUT. The test pattern is selected by a user among a plurality of pre-generated test patterns.

These tests present the drawback of performing a huge set of observation actions which make the test processes rather inefficient.

### BRIEF DESCRIPTION OF THE INVENTION

It is therefore an object of the invention to overcome these drawbacks by providing a novel method of test generation.

To this end, the invention relates to a test generation method for a system such as an integrated device and/or a computer program, comprising the following steps of generating a test set or sequence, applying the generated test set or sequence to the system, characterized in that it comprises setting triggers on given events and according given rules and/or criteria to each trigger, associating a designated action to each event, including the designated actions into the test set or sequence if the criteria and/or rules corresponding to associate events are met.

The Method further comprises computing additional information required by the designated actions.

Additional information is computed on the basis of signal and/or behavior and/or data of the system under test. Moreover, given events and/or additional information are observed in the system under test environment or are predicted or extrapolated by any computational process.

The invention also relates to a system for testing a system such as an integrated device and/or a computer program is disclosed; This system comprises means for setting triggers on given events and according given rules and/or criteria to each trigger, means for associating a designated action to each events and means for including the designated actions into test sets or sequences if the criteria and/or rules corresponding to associate events are met. The system further includes means for computing additional information required by the designated actions.

Finally, the invention relates to a machine readable instructions, embodied in a tangible medium, the instructions causing a machine to perform operations is disclosed. The instructions causing the machine to perform operations comprising set triggers on given events and according given rules and/or criteria to each trigger, associate a designated action to each events, and apply the designated actions if the criteria and/or rules corresponding to associate events are met. The instruction comprises instruction to compute additional information required by the designated actions. Moreover, additional information are computed on the basis of signal and/or behavior and/or data of the system under test and given events and/or additional information are predicted or extrapolated by any computational process.

The details of one or more embodiments of the invention are set forth in the accompanying drawings and the description below. Other features and advantages will be apparent from the description and drawings, and from the claims.

### BRIEF DESCRIPTION OF THE DRAWINGS

Fig. 1 is a flow diagram depicting an embodiment of a test generation method for a system such as an integrated device and/or a computer program in accordance with the invention,

Fig. 2 is a block diagram depicting an embodiment of a system to generate tests for a system under test (SUT) in accordance with the invention,

Fig. 3 a and 3b is a flow diagram depicting an embodiment of a first example of tests generated with the method in accordance with the invention,

Fig 4a and 4b is a flow diagram depicting an embodiment of a second example of tests generated with the method in accordance with the invention,

Fig. 5 is a flow diagram depicting an embodiment of a third example of tests generated with the method in accordance with the invention,

Fig. 6 is a flow diagram depicting an embodiment of a last example of tests generated with the method in accordance with the invention,

### DETAILED DESCRIPTION OF THE INVENTION

To facilitate understanding, identical reference numerals have been used, wherever possible, to designate identical elements that are common to the figure.

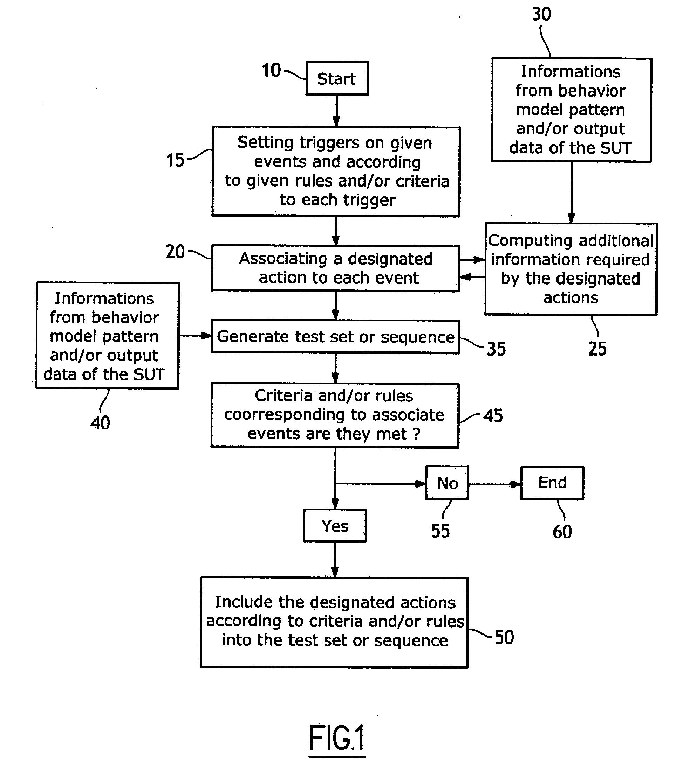

Figure 1 is a flow diagram depicting an embodiment of a method of testing a system such as an integrated device and/or a computer program in accordance with the invention. The method begins at step 10. At step 15, triggers are set on given events and given rules and/or criteria are associated to each trigger. At step 20, a designated action is associated to each events.

Additionally, the method comprises a step 25 of computing additional information required by the designated actions. This additional information is computed on the basis of system under test (SUT) related signal and/or behavior and/or data. Moreover, given events and/or additional information are observed in the SUT environment.

Alternatively, given events and/or additional information are predicted or extrapolated by any computational process.

In another embodiment of the invention, additional information required by the designated actions computed at step 25 can be computed from information of behavior model pattern and/or output data of the SUT in a step 30. The output data of the SUT can be data extract from a log file in which output data of the SUT pursuant to the execution of each action of an old test had been recorded. Said preceding test can be the preceding test executed on the SUT or any test executed in the past.

At step 35, a test set or sequence is generated from at least triggers set on given events (step 15), rules and/or criteria accorded to each trigger (step 15), and action associated to each event (step 20), and eventually from additional information computed at step 25.

In another embodiment of the invention, the test set or sequence is generated at step 35 can further be generated from information of behavior model pattern and/or output data of the SUT in a step 40. The output data of the SUT can be data extract from a log file in which output data of the SUT pursuant to the execution of each action of an old test had been recorded. As described above, said preceding test can be the preceding test executed on the SUT or any test executed in the past.

At step 45, if the criteria and/or rules corresponding to associate events are met, the designated actions are included into the test sequence at step 50.

At step 55, all criteria and/or rules corresponding to associate events have been processed. Then the method ends at step 60.

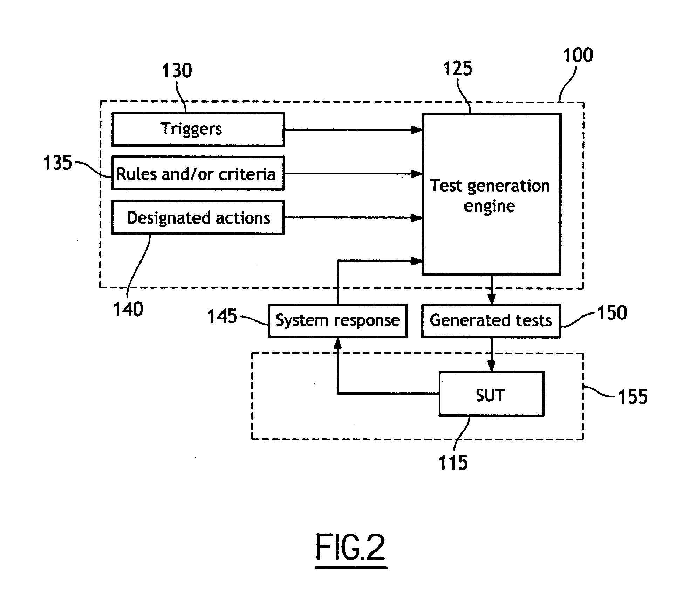

Figure 2 is a block diagram depicting an embodiment of a system generating tests for a system under test (SUT) 115, in accordance with the invention. The system 100 includes a test engine 125. This test engine consists in a computer program embodied in a tangible medium and includes different algorithms. The system 100 includes a test generation engine 125 which generates tests involving triggers 130 on given events, by according given rules and/or criteria 135 to each trigger 130, and by associating a designated action 140 to each event. Tests 150 generated by the engine 125 may eventually be applied to the SUT 115, within a test environment 155 to produce test results 145. Said tests results 145 may be fed back into the engine 125 in order to help it generating the continuation of generated test 150.

The test engine 155 tests the SUT 115 by interfacing with a device driver system, not shown in figure 2, to apply designated actions to the SUT 115. Said SUT 115 processes the generated tests 150 and produces system response 145 in response to these designated actions. Said output data are provided to the test engine 155 via the device driver system and said test engine 155 compares the output data to expected output data and reports the results to the user, such as a validation engineer.

We will describes hereinafter the method of testing a system applied to a simple password system, such as SIM card, banking card or computer logon facility, providing two services to the outer world, a password verification and a password change.

### Password verification

The external entity, such as a user or a test engine, must provide two arguments, the login for identification and the password for authentication. Once completed, it provides to the external entity an information stating if the verification is successful, by providing password matches the one associated to the login in the system, or not. This service is symbolized in the following examples as a function called *verifyPassword* taking two arguments, *login* and *password.* Upon successful verification the function returns a value *OK,* else it returns a value *NOK.*

### Password change

The external entity, such as a user or a test engine, must provide three arguments: the login for identification, the old password value for authentication and the new password. If the provided old password matches the one associated to the login in the system, then the new provided password replaces the older one and a notification of success is sent to the external entity; else the older password remains and a notification of failure is sent to the external entity. This service is symbolized in the following examples as a function called *changePassword,* taking three arguments, *login, oldPassword* and *newPassword.* Upon successful execution the function returns a value *OK*, else it returns a value *NOK.*

In both of the services, return values are external values (as they are directly observable upon service completion), and the login and password values are internal values (they are never directly output). One possible way to check that login and password pairs are internally set as expected is to invoke the password verification service providing the expected login and password and check if it successfully runs or not.

In order not to have to invoke the *verifyPassword* service all the time, conditions and triggers may be set into the test engine in order to detect situations where the *verifyPassword* is actually relevant according to test objectives. Consequently, it is possible to set conditions such as "calling *verifyPassword* only after *changePassword"* and/or "calling *verifyPassword* only when the data provided to *changePassword* matches given conditions" and/or "calling *verifyPassword* only when the internal data updated by *changePassword* is supposed to match given conditions" and/or "calling *verifyPassword* only when the output of *changePassword* matches given conditions" and/or "calling *verifyPassword* only when the output of *changePassword* is supposed to match given conditions".

Therefore, the above mentioned conditions may be "the data is a given value" and/or "the value of the data changes" and/or "the value of the data does not change".

### Example 1:

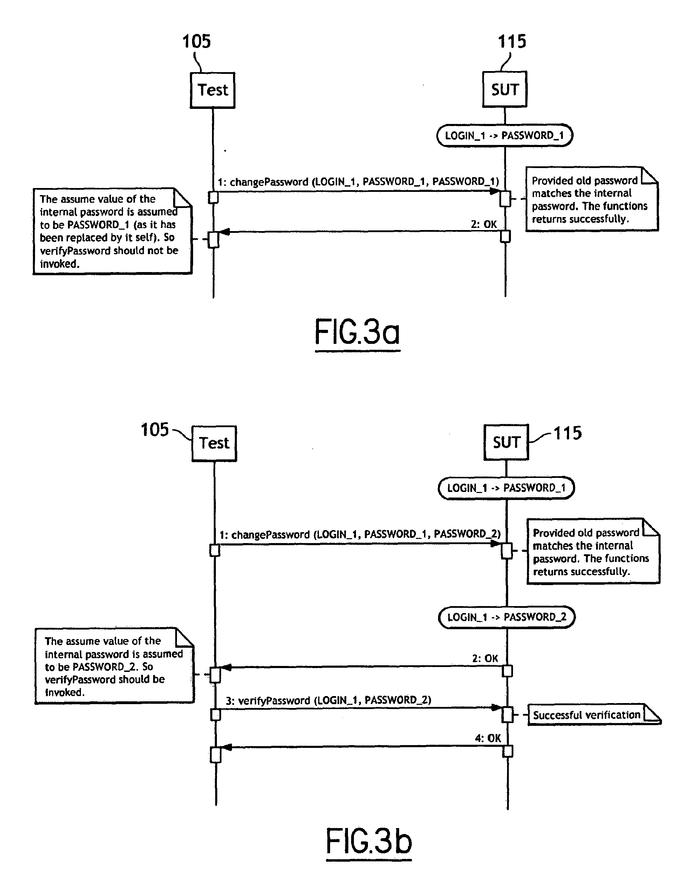

Referring to figure 3a, the trigger of the test engine 105 is *"Run verifyPassword after changePassword when the internal password associated with LOGIN_1 is supposed to be PASSWORD*_*2*". The trigger is not based upon the actual value of the internal data as it may not be actually known, but upon any assumptions made about it by any mean. Thus, these conditions are only met after the successful execution of the *changePassword* service.

The test engine 105 applies the designated actions *"changePassword(login_1, Password_1, Password_1"* to the SUT 115. The provided old password matches the internal password of the SUT 115. Consequently, the output data of the SUT 115 is successful and match the expected output data. The test engine 105 will not apply the designated action *"verifypassword"* since the assume value of the internal password is assumed to be "Password_1" (as it has been replaced by itself).

Referring to figure 3b, the test engine 105 applies then the designated action *"changePassword(login_1, Password_1, Password_2"* to the SUT 115. The provided old password matches the internal password of the SUT 115. Consequently, the output data of the SUT is successful and match the expected output data. Moreover, the assume value of the internal password is assumed to be "Password_2". Therefore, the test engine 105 applies the designated action "*VerifyPassword(login_1, Password_2*)" to the SUT 115. The output data of said SUT 115 is OK and match the expected output data.

### Example 2:

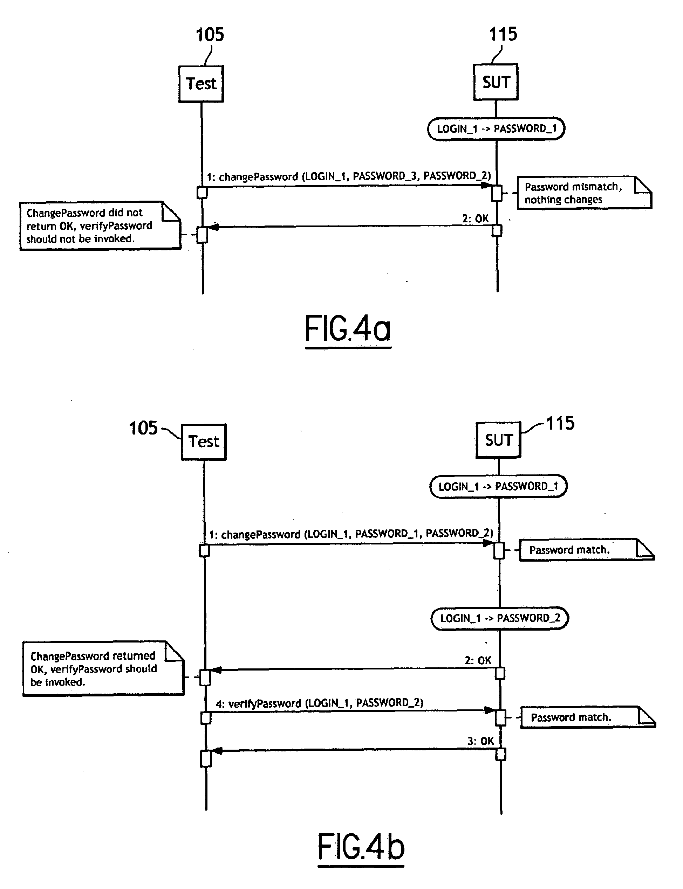

Referring to figure 4a, the trigger of the test engine 105 is *"Run verifyPassword after changePassword when its output value equals to OK".* The triggered is based upon the actual observed output value. Thus, these conditions are only met after the second invocation of the *changePassword* service.

The test engine 105 applies the designated actions *"ChangePassword(login_1, Password_3, Password_1*)*"* to the SUT 115. The new password mismatches the internal password of the SUT 115. Consequently, the output data of the SUT 115 is NOK and mismatch the expected output data. The test engine 105 will not apply the designated action *"Verifypassword"* since the *"ChangePassword"* action returns NOK.

Referring to figure 4b, the test engine 105 applies then the designated action *"ChangePassword(login_1, Password_1, Password_2)"* to the SUT 115. The provided old password matches the internal password of the SUT 115. Consequently, the output data of the SUT is successful and match the expected output data. Moreover, the assume value of the internal password is assumed to be "Password_2". Therefore, the test engine 105 applies the designated action *"VerifyPassword(login_1, Password_2)"* to the SUT 115. The output data of said SUT 115 is OK and match the expected output data.

### Example 3:

In the previous examples, the arguments provided to the *verifyPassword* service are static. Information required by the observation action may also be computed dynamically from rules based on actual or assumed data such as information provided to the previous action. This information can consists in actual information provided by the previous action and/or assumed information provided by the previous action and/or actual information provided by the previous action and/or assumed internal information of the SUT.

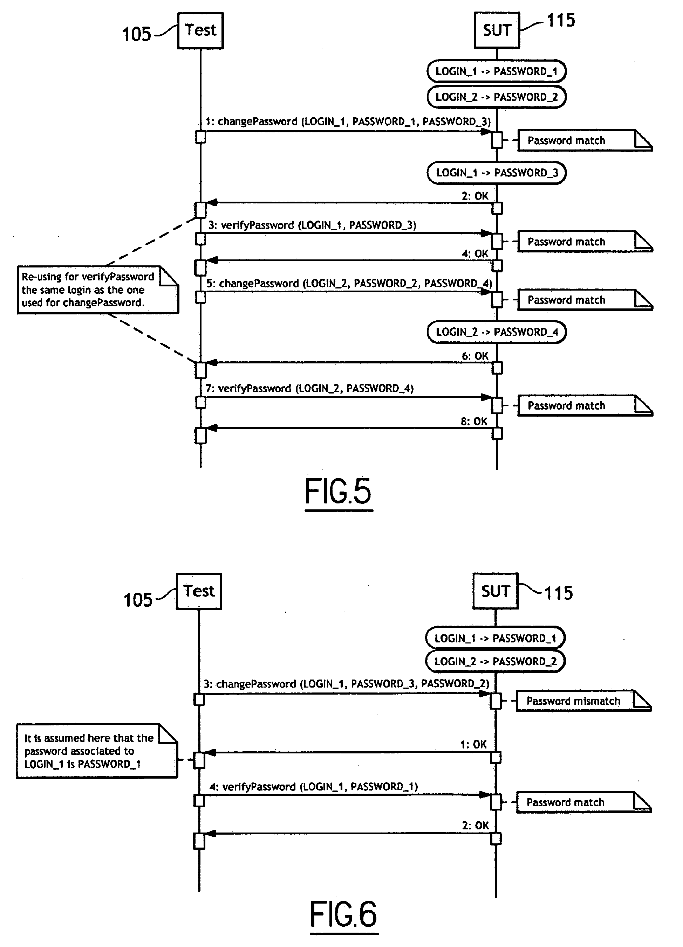

Referring to figure 5, the login provided by the test engine 105 to the *verifyPassword* service of the SUT 115 is the same as the login used in the previous *changePassword* service in order to check that the changed password is actually the one associated to the right login. The test engine 105 applies the designated action *"ChangePassword(login 1, Password_1, Password_3)"* to the SUT 115. The provided password matches the internal password of the SUT 115. Consequently, the output data of the SUT is successful and match the expected output data. Moreover, the test engine 105 applies the designated action *"VerifyPassword(login_1, Password_3)"* to the SUT 115. The output data of said SUT 115 is OK and match the expected output data. Then, the test engine applies the designated action *"ChangePassword(login_2, Password_2, Password_4)"* to the SUT 115. The provided password matches the internal password of the SUT 115. Consequently, the output data of the SUT is successful and match the expected output data. Finally, the test engine 105 applies the designated action *"VerifyPassword(login_2, Password_4*)" to the SUT 115. The output data of said SUT 115 is OK and match the expected output data.

### Example 4:

Referring to figure 6, the information provided to the *verifyData* service is the assumed value of the password initially associated to LOGIN_1 in order to check that the previous invocation of the *changePassword* service did not alter it.

The test engine 105 applies the designated action "*ChangePassword(login_1, Password_3, Password_2)*" to the SUT 115. The provided old password mismatches the internal password of the SUT 115. Consequently, the output data of the SUT is NOK and match the expected output data (it is assumed that the password associated to Login_1 is Password_1). Therefore, the test engine 105 applies the designated action *"VerifyPassword(login_1, Password*_*1)*" to the SUT 115. The output data of said SUT 115 is OK and match the expected output data.

It is to be noted that the advantage of setting triggering conditions to observation actions is to be able to identify the instants where observation is relevant and/or accurate. This avoids needing to perform observation actions all the time, even if it is not relevant. Then it spares test generation time and test execution time.

Moreover, the advantage of dynamically computing the information needed by an observation action at the test production time is to be able to produce tests well suited to the actual or assumed state of the SUT. Setting static values accordingly to prior art into the generated tests would lead to production of mostly irrelevant tests: they would be excessively complex in order for their static observation actions to be able to cover any possible behavior of the SUT. The prediction of all these static actions would require much manual contribution of the user, making the automatic tests generation useless.

It is obvious that the conditions may be any combination of the simple above mentioned conditions. Additionally the observation actions may be triggered by a defined sequence of actions.

Lastly, it is clear that the method according to the invention may be suitable for test generation for any system such an integrated device, a computer program or a combination of an integrated device and a computer program and that the examples given above are no more than particular illustrations implying no limitation with respect to the fields of application of the invention.

## Claims

1. A test generation method for a system such as an integrated device and/or a computer program, comprising
- generating a test set or sequence, and
- applying the generated test set or sequence to the system,
**characterized in that** it comprises:
- setting triggers on given events and according given rules and/or criteria to each trigger,
- associating a designated action to each event,
- applying the designated actions if the criteria and/or rules corresponding to associate events are met.

2. Method according to claim 1 **characterized in that** further comprising computing additional information required by the designated actions.

3. Method according to claim 2 **characterized in that** additional information are computed on the basis of signal and/or behavior and/or data of the system under test.

4. Method according to any claim 1 to 3 **characterized in that** given events and/or additional information are observed in the system under test environment.

5. Method according to any claim 1 to 4 **characterized in that** given events and/or additional information are predicted or extrapolated by any computational process.

6. Method according to claim 5 **characterized in that** additional information are computed from information of behavior model pattern and/or output data of the SUT.

7. Method according to any claim 1 to 6 **characterized in that** the test set or sequence is further generated from information of behavior model pattern and/or output data of the SUT.

8. A test generation system for a system such an integrated device and/or a computer program, **characterized in that** it comprises means for setting triggers on given events and according given rules and/or criteria to each trigger, means for associating a designated action to each events and means for applying the designated actions if the criteria and/or rules corresponding to associate events are met.

9. System according to claim 8 **characterized in that** it includes means for computing additional information required by the designated actions.

10. Machine readable instructions, embodied in a tangible medium, the instructions causing a machine to perform operations comprising
- set triggers on given events and according given rules and/or criteria to each trigger,
- associate a designated action to each events,
- apply the designated actions if the criteria and/or rules corresponding to associate events are met.

11. The instruction of claim 10 **characterized** it further comprises instruction to compute additional information required by the designated actions.

12. The instruction of claim 11 **characterized in that** additional information are computed on the basis of signal and/or behavior and/or data of the system under test.

13. The instruction of any claim 10 to 12 **characterized in that** given events and/or additional information are predicted or extrapolated by any computational process.
